# EUROPEAN PATENT SPECIFICATION

(11) **EP 3 452 719 B1**
(45) Date of publication and mention of the grant of the patent: **01.07.2020**
(21) Application number: 17734149.2
(22) Date of filing: 02.05.2017
(51) Int. Cl.: F03D 3/06, F03D 7/06

(54) **VERTICAL AXIS WIND TURBINE WITH MOVING BLADES**
WINDTURBINE MIT VERTIKALER ACHSE UND BEWEGLICHEN SCHAUFELN
ÉOLIENNE À AXE VERTICAL ET PALES MOBILES

(30) Priority: 04.05.2016 IT UA20163710
(43) Date of publication of application: 13.03.2019
(73) Proprietor: Fracaroli, Flaminio, 36075 Montecchio Maggiore (VI) (IT)
(72) Inventor: Fracaroli, Flaminio, 36075 Montecchio Maggiore (VI) (IT)
(74) Representative: Ziliotto, Tiziano
(86) International application number: PCT/IT2017/000097
(87) International publication number: WO 2017/191666

(56) References cited:
- EP-A1- 1 457 672
- WO-A1-80/00991
- US-A1- 2011 020 123
- US-A1- 2015 016 997

## Description

This invention, from a technical viewpoint, falls within the scope of wind generators. This invention specifically refers to a vertical axis wind turbine of the Darrieus type. More specifically, this invention refers to a vertical axis wind turbine of the Darrieus type fitted with moving vertical blades, for power generation.

### STATE OF THE ART

In the power generation industry, devices consisting of vertical axis wind turbines (VAWT), also known as Darrieus type, have been in use for some time. This type of turbine basically consists of three or more blades, positioned in a vertical direction, parallel to the turbine rotor vertical axis, placed peripherally in respect of the said axis, at a certain distance (radius), equally distant one from the other, firmly connected to the metal arms which support them and connect them to the central rotor of the turbine under examination.- Initially the blades were linear, then other patents introduced many other shapes, of several curved types; in some cases the blades are not fixed but moving. The Darrieus vertical axis blades operate by carrying capacity, with winds coming from any direction. However, state-of-the-art Darrieus turbines, either with fixed or moving blades, seem to have some technical shortcomings. The first shortcoming of these turbines is their difficulty in starting the turbine rotor movement, that is to say the difficulty in breaking inertia, especially with low wind speeds.- This is a typical shortcoming in turbines of the known type as operating by carrying capacity.-Sometimes the solution used in order to eliminate this shortcoming for Darrieus type turbines is a coupling with blades operating by resistance to the wind or other known systems. Another shortcoming in these turbines is that they do not have any self-limitation system with strong winds, which means that there can be mechanical hold and efficiency issues as regards power generation.

The purpose of this invention is to resolve the aforesaid shortcomings.

Moreover, another purpose of this invention is to present a solution which allows for an increase in performance of the turbine as a whole, both with average and high wind speeds. The term "performance" refers to a higher torque of the rotor in the turbine referred to in this patent, compared to the torques of other types of turbines, with the same wind speed, the same blade surface areas and air surface affected by the movement of the latter. Another purpose of this invention consists in designing a system which can easily stop turbine rotation if the winds are particularly strong.

Wind turbines according to the prior art are known, for instance, by documents US 2011/020123 A1, EP 1 457 672 A1, US 2015/016997 A1 and WO 80/00991 A1.

### SUMMARY OF THIS INVENTION

The invention is defined by the appendend claims.

This invention involves the construction of a vertical axis wind turbine consisting of a rotor with three or more moving blades, placed peripherally in respect of the turbine rotor, equidistant from the turbine axis, individually connected to the said rotor through one or more first connection devices; on the rotor side the latter are fitted with joints, and on the blade side with hinges. This allows each blade to revolve around its vertical axis, taking different angular positions in respect of the relevant connection devices; these angular positions are achieved by means of auxiliary control devices operated by a suitable piloting mechanism associated with the movement of the central rotor. The purpose of this invention, therefore, consists in the construction of a vertical axis wind turbine which shall include a rotor that can only revolve around its vertical support structure; the latter is of varying length and firmly connected to the ground (pillar, trellis, loft, roof, etc.).

The height of the rotor is based on its vertical rotation axis, which is the same as that of the turbine, with a length sufficient for the correct and safe fixing of all connection devices on the three or more blades which, as already mentioned, are placed vertically, following a peripheral direction in respect of the rotor in question, equidistant from the turbine rotation axis.- The vertical length of the rotor shall also include the fixing points for any tie-rods and bracing mechanisms for the mechanical strengthening of the revolving structure, as well as any devices for transmitting its revolving motion to the power generator. Each blade is connected with the relevant first connection mechanisms through a hinge; on the opposite side, the first connection mechanisms are firmly fixed to the rotor by means of joints.- The said connection mechanisms allow the three or more blades of the rotor to revolve at the same time, following the main rotation axis of the turbine. At the same time, the blades are free to move following their vertical axis because they are controlled by suitable mechanisms. The various angular positions of the blades with regard to their own axis during the revolving movement around the turbine axis - as already mentioned - are achieved by means of auxiliary control mechanisms associated with each blade; the latter include control mechanisms with one end fixed onto the said blades using a hinge at a predetermined distance from the rotation axis of each blade, and the other end connected - also using a hinge - to the first connection mechanisms which belongs to the piloting device shared by all the blades in the turbine, located in the centre of the said turbine rotor.- This piloting device is mechanically operated and moves all its connection elements at the same time, their number being the same as the number of blades, while the rotor is in motion, with different speeds and angles; as a consequence the entry side of the wing profile of the blades will have the most favourable incidence angle in respect of the wind, which is expected to produce the highest possible torque in the turbine. According to a preferred implementation form of this invention, the piloting device shall include a control pivot whose axis runs parallel to the main rotation axis of the turbine, as well as a number of first and second connection elements which coincides with the number of blades.- This control pivot can follow a linear movement, in a horizontal direction, operated by an electric motor.- The length of its horizontal freedom of movement is predefined.- The axis of the control pivot which causes it to move coincides with the axis of the turbine.- The control pivot includes all the hinges on the end of the first connecting elements of all blades in order to connect the latter (control pivot) with the various control elements of the individual blades, as mentioned above, always using hinge mechanisms.- The second group of connecting elements, with hinge mechanisms on all ends, and parallel axis one with the other, connect the fixed pivots located in the centreline of all first connecting elements with the fixed pivots placed, for each blade, in axis to one of the connection mechanisms, with the distance from the turbine axis being equal to the length of the said second connecting elements.- More specifically, this value is expected to be half of the length of the first connecting elements. The horizontal linear movement of the control pivot mentioned above, which produces all the various angular movements of the blades while the rotor revolves, is produced by an electric motor as a consequence of the enabling of its shaft by a control unit, after the latter has finished processing the data related to current wind speed, which is measured by an anemometer installed for this purpose close to the turbine. The vertical control pivot will move further apart from the turbine axis proportionally to the wind speed measured at that moment becoming weaker. The distance of the control pivot axis from the turbine axis will be inversely proportional to the wind speed which is measured at that moment. According to a preferred implementation form of this invention, the control pivot can also be placed in a position which coincides with the main rotation axis where the distance of the control pivot axis compared to the main turbine rotation axis equals zero.

In this case the blades remain in the same angular position (90°) as the first connecting mechanisms while the blades are revolving around the rotor, that is to say during the whole turbine rotation. A second electric motor is assembled and supported inside the mechanical support of the whole turbine, in axis with the rotor of the latter, therefore with an axis which coincides with the main one of the turbine. The shaft of the aforesaid motor is connected, by means of a mechanical joint and of a self-centring element, to the turbine support, sustained by the horizontally sliding cart onto which the vertical control pivot referred to above when describing the piloting device is firmly fixed.- if necessary it is possible to install a suitable speed reducer between the electric motor and the mechanical joint.- The control unit, after having recorded and analysed the angular value of the wind direction at that moment, by means of a sensor (weathervane), suitably installed close to the turbine, enables the rotation of the shaft on the aforesaid vertical electric motor, with the correct number of rounds to the right or to the left and correctly places the positioning device on the control pivot in the piloting unit, as described above and connected to it, depending on the wind direction at that moment.-

The wind turbine, through the movement of its rotor, starts the revolving movement of the shaft on a power generator.-

### BRIEF DESCRIPTION OF THE ILLUSTRATIONS

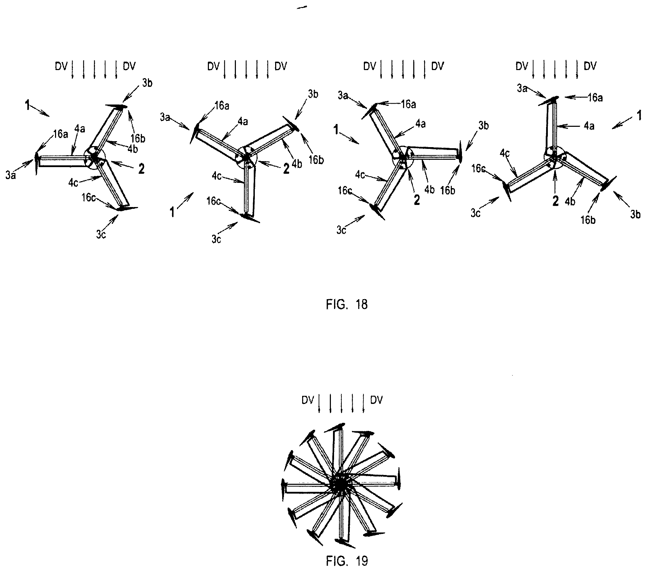

The other benefits, objectives and aspects, as well as the implementation forms of this invention, are described in the claims and will be clarified in the sections below by means of the following description, where reference is made to the drawings appended hereto. More specifically:
- fig. 1 shows an axonometric view of a preferred implementation form of the wind turbine in this invention;
- fig. 2 shows the turbine in fig. 1 without protection devices;
- fig. 3 shows an axonometric view of the vertical section of the support structure (6) on the turbine.-
- fig. 4 shows the motor-driven positioning device (100) of the control pivot (72) fixed onto the self-centring element below (120) allowing for rotation of the system (100) according to the wind direction, using an electric motor (130);
- fig. 5 shows an exploded view of figure 4;
- fig. 6 shows a simplified plane view of figure 1 with some elements removed;
- fig. 7 is an enlargement of a detail taken from the central area in fig. 6;
- the figures from 8 to 10 include a schematic overview from above of the turbine in fig. 1, comparing the turbine in various operating positions and where figure 8 corresponds to the operating position in fig. 6;
- fig. 11 shows an axonometric view of an enlarged detail from fig. 2: driving unit (70) for the three blades;
- the figures from 12 to 14 show the driving unit for each individual blade;
- fig. 15 shows an enlarged detail from fig. 4 of the motor-driven positioning device (100) on the control pivot (72).- the round supporting element (24) hides the self-centring element (120) to which the device (100) is fixed;
- the sequence in figure 16 shows a view from above of the turbine in fig. 1 in various positions during its rotation (specifically every 30°) and corresponding to the initial operating position in 8 (with maximum eccentricity of the control pivot);
- figure 17 shows a view from above of the turbine in fig. 1 with images overlapped of the sequence in figure 16 in various positions during rotation (specifically every 30°), corresponding to the initial operating position in figure 8 and with maximum eccentricity.-
- the sequence in figure 18 shows a view from above of the turbine in fig. 1 in various positions during rotation (specifically every 30°) and corresponding to the initial position in figure 9 (with medium eccentricity of the control pivot);
- figure 19 shows a view from above of the turbine in fig. 1 with images overlapped of the sequence in figure 18 in various positions during rotation (specifically every 30°) and with medium eccentricity.-

### DETAILED DESCRIPTION OF THIS INVENTION

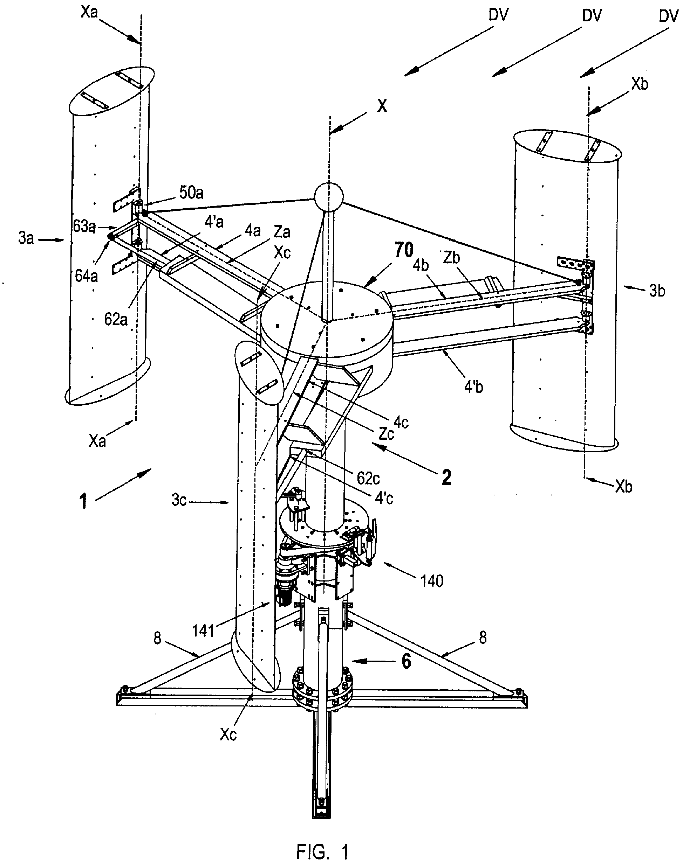

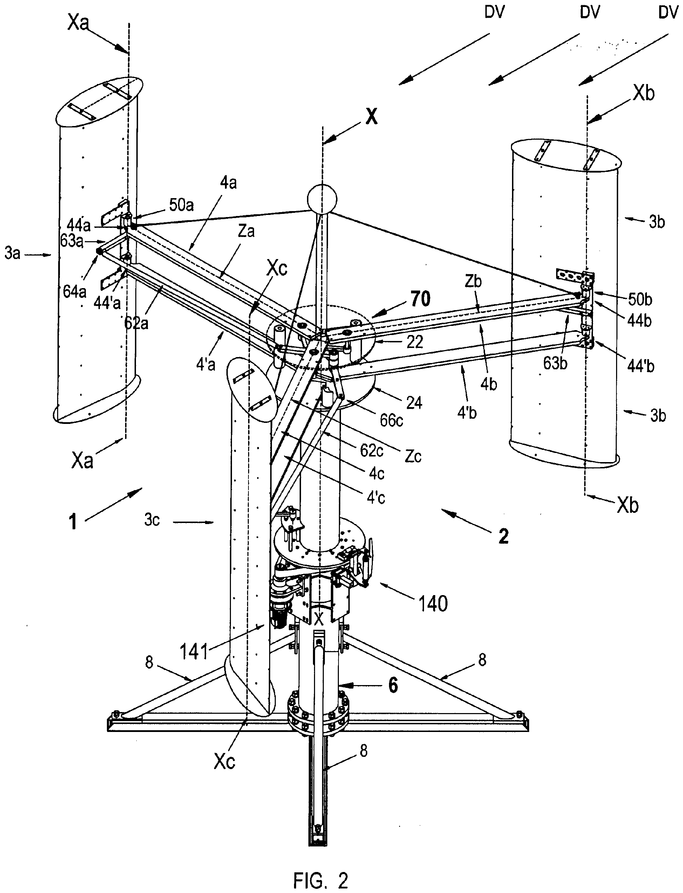

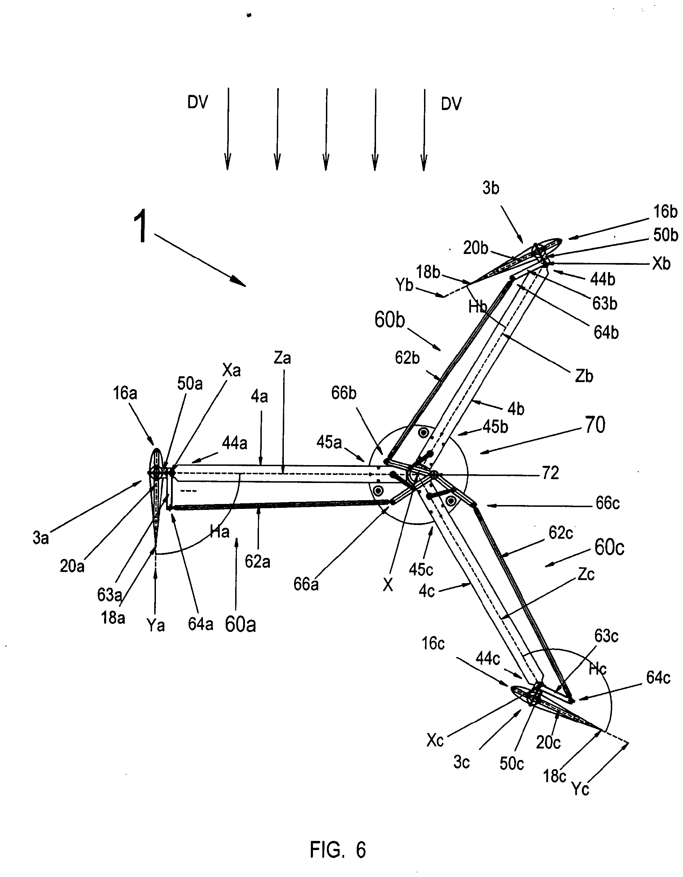

This invention is described in the following sections with regard to its implementation form shown in the drawing tables, nevertheless it is not limited merely to the implementation form described in the following sections and shown in the tables below.- In actual fact, the implementation from described and drafted helps clarify some features pertaining to this invention, whose purpose is explained in the relevant claims. This invention has proved to be especially useful with regard to the construction of a vertical axis wind turbine with moving blades which have a symmetric wing profile. It should be noted, however, that this invention can be usefully applied also in the case of vertical axis wind turbines with moving blades, which are all the same although they might differ in terms of number, profile and size. Some of the parts of turbine **1*,*** most notably the blades, are built with practically the same features; therefore in the drawings the similar parts will be referred to using the same number and diversified only through "**a**", "**b**" and "**c**" following the number. In the following description, for reasons of simplicity, reference will be made only to the parts referred to as "**a**", bearing in mind that the description applies to the other similar parts referred to as "**b**" or "**c**". An example of preferred implementation of turbine **1**, which is the subject of this invention, appears in the illustrations appended hereto . Figures 1 and 2 show that the turbine consists of a rotor **2** which follows a vertical direction around a main rotation axis **X,** three blades **3a, 3b, 3c,** placed peripherally around the said rotor **2** and connected to it by means of the first connecting mechanisms or elements (rods); the latter should ideally include a couple of support rods **4a, 4'a, 4b, 4'b, 4c, 4'c.** The support rods **4a, 4'a, 4b, 4'b, 4c, 4'c** correspond to the relevant axes **Za, Zb, Zc,** as shown by the example in figure 6. This implementation form includes a couple of support rods for each blades; it is clear, however, that in other implementation forms the number of support rods for each blade may be increased, or possibly even consist of only one support rod.- Also the length of the rods, in various implementation forms, might differ, but they shall always be the same for all blades. The blades **3a, 3b**, **3c** are placed at the same distance at a 120° angle one from the other.- The said angle will certainly vary as the number of blades varies. As is well known, in wind turbines the wind action caused the blades **3a, 3b**, **3c** to rotate following the main axis of the turbine.- There is then a rotation of the central rotor **2** which is connected to a power generator **141.-** This generator may be assembled coaxially to the rotor 2 or laterally through a gear, belt, chain transmission or otherwise.-

The central rotor **2** is supported through ball or roller bearings by a fixed tubular structure **6,** or inner shaft **6,** whose base is supported by a stabilising structure with bracing mechanisms **8,** for anchoring to the ground or to the relevant support surface, which may be a loft, roof, metal trellis or reinforced concrete structure, etc.-

The turbine **1** is fixed in such a way as to make sure that the main revolving axis **X** of the rotor is vertical. The rotor **2** revolves coaxially and externally in respect of the inner support shaft **6** through ball or roller bearings - which are not shown here - placed between the inner shaft **6** and the external rotor **2**.**-** It should be noted that figures from 3 to 5 are shown using "cavalier" axonometry.- the elements which seem elliptic, however, should be regarded as circular.

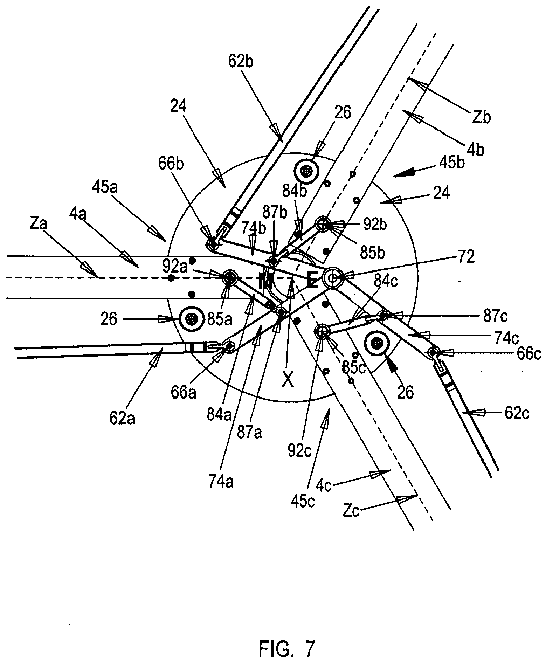

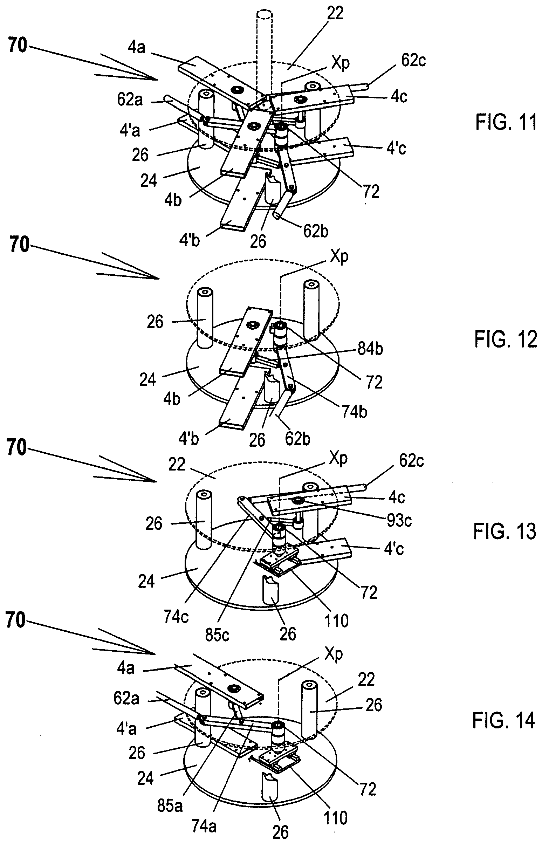

The blade **3a** is developed along its own axis, vertical and parallel to the main rotation axis X of the turbine. In the implementation form shown here, the connection between the two ends **44a** and **44'a** of the rods **4a, 4'a** and the blade **3a** consists of two hinges (50a), whose axis are in line with one another, parallel to the turbine axis, coinciding exactly with the blade rotation axis **Xa.** These two hinges allow for a revolving movement of the blade **3a** around its own axis **Xa.** This axis shall coincide exactly with all the axes of any number of hinges used greater than two, if several connecting mechanisms or elements are in place. The distance of the own axis **Xa** of the blade **3a** from the main revolving axis X of the turbine is known as radius R of the turbine **1.** While the turbine **1** rotates, that is to say when the blades **3a, 3b, 3c** turn around the main revolving axis **X,** the three blades **3a, 3b**, **3c** are moved individually following their axis **Xa, Xb, Xc,** controlled in the way which shall be described below. In the implementation form shown here, the blade **3a** has a constant symmetric wing profile section throughout the length of the blade.- More specifically Fig. 6 shows the connecting edge **16a,** the exit edge **18a,** and the line **20a** which connects the two edges **16a** and **18a** coincides with a direction **Ya** of the wing profile. The axis **Ya** of the blade **3a** and the axis **Za** of the relevant support rod **4a** form an angle **Ha.** The control pivot **72,** which will be described below, placed at the maximum distance from the axis **X** of the turbine, makes sure that while the turbine **1** completes one round, the blades **3a, 3b** and **3c** take angular positions which are different from the relevant support rods, **4a, 4'a, 4b, 4'b, 4c, 4'c;** thus the angular values **Ha, Hb, Hc** vary; more specifically they individually complete an alternative revolving movement, with a maximum width of about 60°, amounting to approximately 120° in total, as described in more detail below. In alternative implementation forms, the wing profile of the blade may take any other shape, for example asymmetric profiles in various sizes and proportions (flat, concave, convex, etc.). Fig. 2 and 7, in the upper area of the rotor, show first of all two support elements **22, 24,** (round plated), firmly distanced one from the other and firmly interconnected by means of three spacers **26** (pipes) of equal length. The lower element **24** (round plate), is firmly connected with the rotor **2.-** Also the element **24** transmits to the rotor itself the revolving motion which it receives from the connection mechanisms **4'a, 4'b, 4'c** of the blades, **3a, 3b, 3c,** then transmits, because of the spacers **26,** the revolving motion from the upper element **22** (round plate) to which the other connection mechanisms **4a, 4b, 4c** are fixed, supporting the three blades **3a, 3b, 3c.** Fig. 6 shows another advantageous element in this invention, namely that the different angular positions of the blades **3a, 3b, 3c,** in respect of the relevant support rods **4a, 4'a, 4b, 4'b, 4c, 4'c,** are obtained by means of appropriate auxiliary control mechanisms **60a, 60b, 60c,** connected to the blades. The control mechanisms **60a,** connected to the blade **3a,** include a control element **62a,** which shall have a predefined length, whose first end **64a** is connected through a hinge to the control arm **63a,** whose length shall be also predefined, joined to the blade **3a,** and a second end **66a** connected, through a hinge, to the connection rod of the piloting device **70,** which is placed in axis with the rotor 2 exactly between the two elements **22** and **24** (round plates) .- See Fig. 11 to 14. In this implementation form, the piloting unit **70** is in the middle of the turbine in axis with the latter, but it could also be elsewhere (at the top or on the bottom), but always in axis with the turbine rotor. The piloting device **70** is placed between the two round plates **22** and **24** mentioned above.- The piloting device **70** includes first of all vertical control pivot **72,** which needs to be long enough to include the hinges of as many first connection rods as the number of blades in the turbine; its axis **Xp** runs parallel to the main rotation axis **X** in rotor **2.-** The control pivot **72** is able to move in a straight horizontal direction, for a specific length E. The different positions of the control pivot **72** in respect of the main revolving axis **X** are obtained by means of a motor-driven positioning device **100,** which will be described below.-

Fig. 7 shows that the piloting device **70,** associated with the blade **3a,** is also expected to include a first connecting element **74a** which shall link the control pivot **72** to the second end **66a** of the control element **62a.-**

The piloting device **70,** associated with blade **3a,** also includes a second connecting element **84a,** with one first end **85a,** hinged onto a pivot fixed along the axis **Za** to the connecting mechanism **4a** of the blade **3a,** on point **92a** at a distance from the axis **X** which is equal to half the length of the first connecting element **74a.-** The other end of the second connecting element **84a,** is connected through a hinge on intermediate point **87a** (centreline) of the first connecting element **74a.-**

When constructing the piloting device **70,** for its correct operation, in order to ensure the best incidence angle of the blades with regard to the wind direction during their circular rotation path around the axis main **X** of the turbine, it is necessary to use the following proportions between the connection, linkage and control elements.- See Fig. 6 and 7.-

With the following turbine data being certain:
- the distance from the rotation axis **X** of the turbine to the rotating axis **Xa** of the blade is equal to the radius **R.-**
- the distance from the rotation axis **X** of the turbine to point **92a** on the axis **Xa** is equal to the "module" **M.-**
- the length of the first connecting element **74a** in the piloting device is **twice** the length of **M.-**
- the length of the second connecting element **84a** in the piloting device is equal to the length of **M.-**
- the distance which goes from axis **X** to the most distant point which can be reached from the control pivot **72** is known as "eccentricity" **E;** it can have any design value, however it should always be lower than the length of the **module** reduced by half of the sum of the technical overall size of the hinges within the first and second connecting element, respectively at the level of the pivot **92a** and of the control pivot **72.-**
- the length of the control arm **63a** is equal to the distance which goes from the rotation axis **Xa** of the blade **3a** to the axis of the hinge on point **64a** in the middle of the connection **62a.** it is proportional to the length of the module M and to that of the eccentricity **E.-** specifically **63a** = (√(3M²-2ME-E²)+M√3)/2.-
- the length of the connecting mechanism **62a** is proportional to the length of the radius **R,** to that of the module **M** and to that of the eccentricity **E.-** More specifically: **62a** = √{(R-M)²+[(y-x)/2]²} where the value of y = n√3 and the value of x = √[4M²-(M+E)²].-

In the implementation form shown here, in figure 6 and the enlarged detail in figure 7, the control pivot **72** with the axis **Xp** is placed at the maximum distance from the axis **X** of the turbine, which means that it has the greatest eccentricity in respect of the axis **X** of the turbine.-

This position is calculated taking into account a condition of weak speed.-

Also in figures 6 and 7 the overall orientation in respect of the wind direction at any given moment is positioned as if the wind were blowing from the top down, as indicated in the two figures by the acronym **DV.-**

The static configuration of figure 6 shows that in the mechanical piloting device **70** and the control mechanisms **62a, 62b, 62c, 63a, 63b, 63c,** the respective blades **3a, 3b, 3c**, are placed in angular positions **Ha, Hb, Hc,** in respect of the connecting mechanisms (support rods) **4a, 4'a, 4b, 4'b, 4c, 4'c.** More specifically, it can be noted from figure 6 that the first blade 3a forms the angle **Ha** = 90° in respect of the first support rod **4a,** the second blade **3b** forms the angle **Hb** = 30° in respect of the second support rod **4b** and the third blade **3c** forms the angle **Hc** = 150° in respect of the third support rod **4c.-** All three blades have correct wind exposure with incidence from the wing profile entry side.-

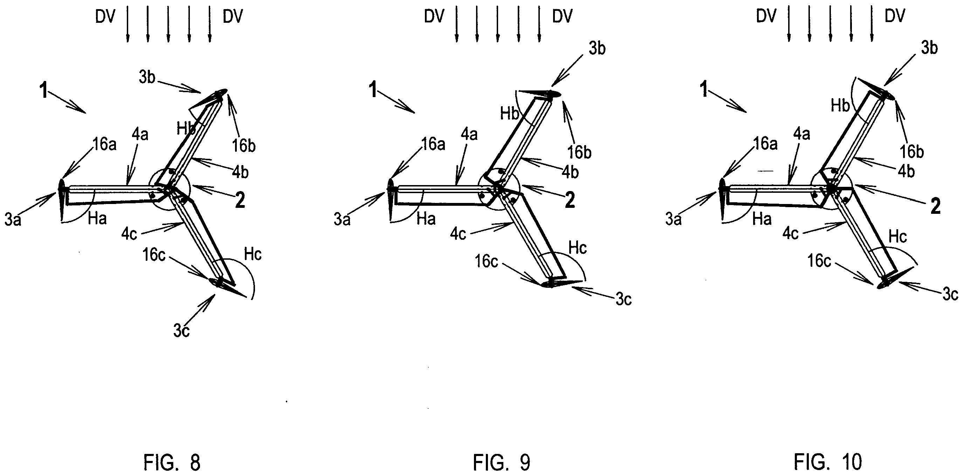

It is possible to compare figure 8 with figure 10.- Both show the three blades in similar angular positions with regard to the rotor. The first shows the static position of the three moving blades with maximum eccentricity of the control pivot **72,** as in figures 6 and 7; in the second the eccentricity value is zero. The latter position would be the same which a turbine with fixed blades of the Darrieus type would have.-

It should be noted that the wind hits both wings on the left side with the correct entry incidence angle equal to zero, causing the same weak resistance of the blade to the wind, and an equally as weak negative torque of the rotor.- as regards the other two blades in the two drawings mentioned above, it should be noted that, in figure 8 where the turbine with moving blades has the maximum eccentricity, the wind hits correctly the two entry sides of the two blades, while in the figure 10 - which shows a turbine corresponding to the one with fixed blades - the wind hits the blades from the exit side.- Without considering the different incidence angles, it is possible to conclude that, from an aerodynamic perspective, figure 10 is not correct because the blade position in respect of the wind direction does not allow for the best possible use of the wind thrust. This explains why the turbine referred to in the invention as shown in Fig. 8 and 9, starts to rotate with a smaller wind speed.- It independently breaks its inertia with low wind speed, unlike what happens for example in the turbines with fixed blades, Fig. 10.- This is the reason why the turbine, with correctly oriented moving blades, is able to rotate with less wind speed.- It is more efficient that the turbine with fixed blades.-

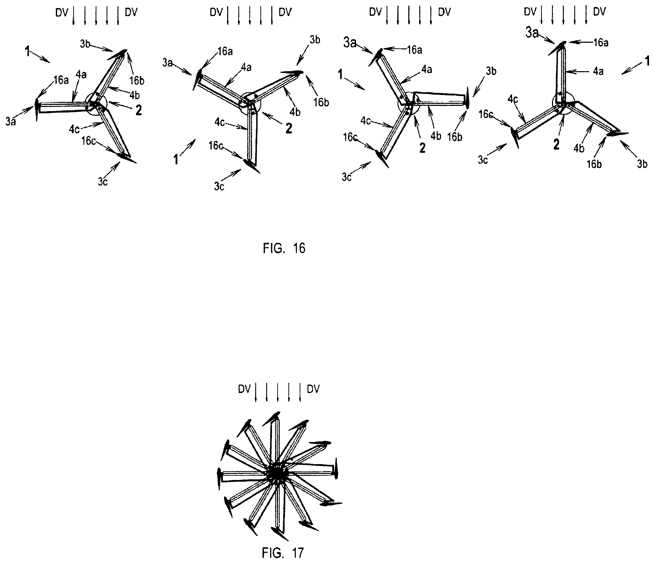

In the static configurations of the four drawings shown in figure 16 the control pivot **72** and the correct overall orientation system to wind direction in that moment, are positioned as mentioned above, that is to say with maximum eccentricity and wind coming from the top of the image.-

Also in figure 16, the drawing on the left should be considered the starting point in respect of the subsequent three drawings which show the angular static positions of the three blades at each angular rotation in a clockwise direction of the turbine rotor by 30° each in respect of the previous position.- Figure 17 shows the four drawings in figure 16 overlapping, where it is worth noting the position of the three blades every 30° within 360°.-

The sequence shows how the incidence angle of each blade **3a, 3b, 3c** changes in respect of the wind direction **DV.-**

The variation of the angles **Ha, Hb, Hc,** while the turbine is revolving allows for efficient positioning of each blade **3a, 3b, 3c**, in respect of the wind direction **DV,** thus transforming the wind thrust into rotor torque.-

By the same token, in drawings no. 18 and 19, with the length of the eccentricity **E** halved without the control pivot by the turbine axis, it is possible to notice the variations in the angles **Ha, Hb, Hc.-** It should also be noted that the performance of the turbine is reduced compared to the sequence in figures 16 and 17 because the blades are hit by the wind with a smaller incidence angle.- the control unit with which the turbine with moving blades referred to in this is invention is fitted, in order to suitably adjust the speed of the rotor and - as a consequence - the generator speed in the optimal way to produce electricity, according to the variability of the wind speed, modifies the eccentricity E in order to reduce or increase the turbine performance.-

For most of the 360° rotation degrees in a full round of the turbine, the wind hits advantageously the entry sides **16a, 16b,** and **16c** on the wing profiles of the blades.- With the maximum eccentricity value **E,** it has been possible to speed to the maximum the partial rotation manoeuvre (about 120°) of the blades around themselves to avoid exposing the wrong side to the wind.- The said manoeuvre takes place only once every 360°.-

This is expected to result in an increase as regards turbine performance compared to existing models.- Such performance increase is achieved by managing, as described above, the angular position of the blades **3a, 3b, 3c,** in respect of the wind direction **DV** to make sure that the latter, as they revolve around the main axis **X,** are hit by the wind from the best possible incidence angle according to aerodynamic laws, which in turn causes a greater torsion strength on the rotor.-

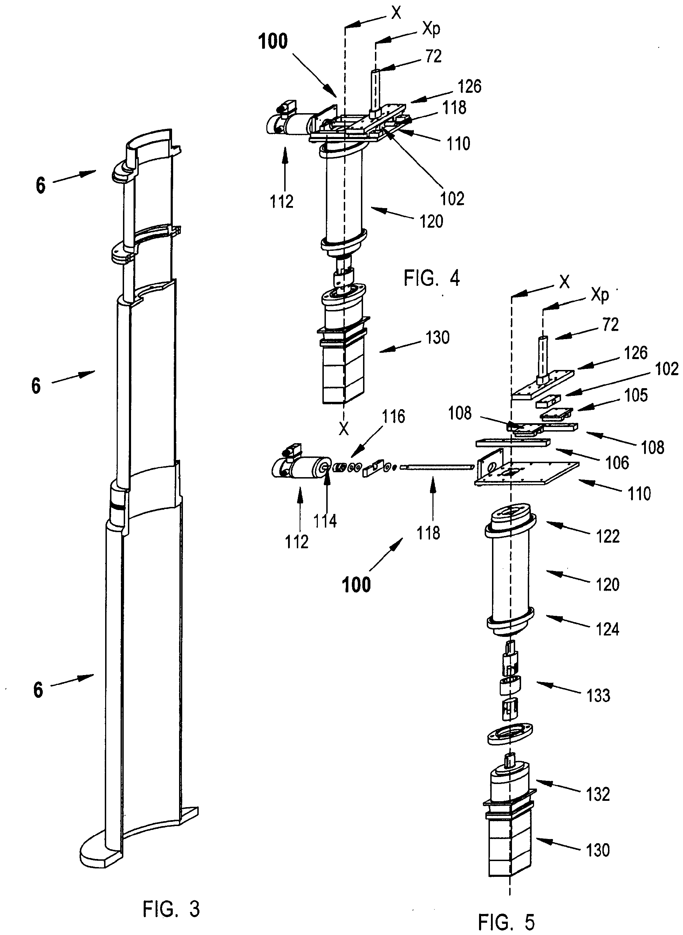

The motor-driven positioning device **100** on the control pivot **72,** as shown in figures 4 and 5, actually consists of the vertical control pivot **72** which is firmly fixed to a horizontal flat profile **126;** the latter is assembled on two skids **104** and **105** with ball recirculation and two horizontal linear runners **106** and **108;** as a consequence it can only move in a horizontal direction and the movement length is equal to the one in the calculation mentioned above.-

It is important and essential that the beginning of the movement possibility for the control pivot **72** (start of the stroke) should correspond to the intersection of the cart movement horizontal axis with the vertical axis **X** of the turbine.-

In other words, the axis Xp needs to coincide with the axis X.-

The two runners **106** and **108** and the two skids **104** and **105** may also be replaced by two calibrated round profiles and two sliding sleeves, also ball recirculating or by two mutually sliding elements which shall be connected through a dovetail joint or by means of a similar system.-

The cart **126** is fixed using the female screw **102** inside which the threaded bar **118** revolves which is connected through the joint **116** to the shaft **114** of the electric motor **112** which is fixed onto the horizontal support **110** onto which also the two aforesaid linear runners **106** and **108,** to slide the cart **126.-**

Therefore the clockwise or anticlockwise revolving movement of the shaft **114,** of the electric motor **112** changes the horizontal position of the vertical control pivot **72** with the relevant axis **Xp.-**

The horizontal movement of the control pivot **72** is designed as a function of the wind speed at that movement measured by the control unit (not displayed) through the sensor (anemometer) placed on the outside close to the turbine, and a function of other parameters which the control unit needs to take into account and manage at the same time.-

It is certain that the distance of the control pivot **72** from the axis **X** is inversely proportional to the wind speed.- The maximum performance of the turbine is achieved when the eccentricity **E** of the control pivot **72** is at its maximum compared to the turbine axis.-

Should the control unit detect that the wind speed is excessive compared to the amount of energy required by the use system, it reduces the performance of the turbine by decreasing the eccentricity value **E** all the way to zero.-

In this situation the piloting unit, by means of the connecting and control elements, during the rotation of the turbine, causes the angular positioning of all blades in respect of the connecting mechanisms of elements, which is the same between each of them, by 90°, as shown in figure 10.- The turbine system is thus practically changed to a Darrieus version with fixed blades.-

In order to achieve maximum performance from the turbine, the overall mechanism **100** to adjust the eccentricity value on the control pivot **72** in respect of the position along the axis **X** of the turbine, which is responsible for the continuous angular adjustment of the blades according to their axis while the turbine is in operation, needs to be promptly oriented following the wind direction at that moment, on the level of the maximum distance of the control pivot **72** from the axis **X** of the turbine.-

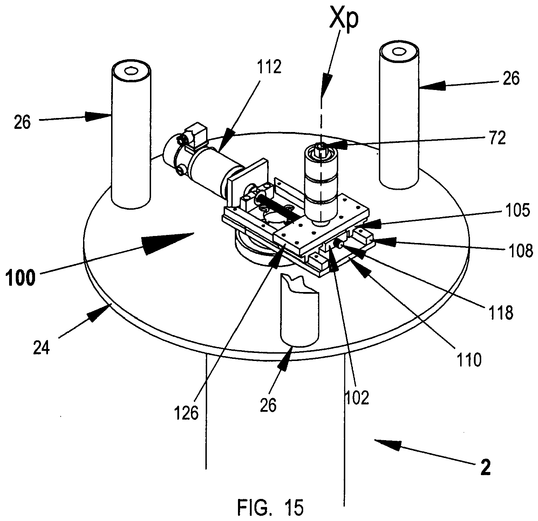

This direction is produced by the motor **130** which is installed vertically in axis with the turbine axis within the fixed support **6** of the turbine.- See Figures 4 - 5 - 15.-

The motor **130** is fixed on the permanent section **6** of the turbine support; it is fitted with a reducer **132,** which is assembled axially. The shaft coming out of the reducer, with a mechanical joint **133,** is connected to a cylindrical element **120,** self-centred by two bearings **122** and **124** assembled on the inside of the support **6** of the turbine.-

The self-centring unit **120** is firmly connected with the horizontal support **110** to which the whole motor-driven positioning device **100** is linked for placing of the control pivot **72.-** The electric motor **130** is thus connected to the motor-driven device **100.-** The axis of the electric motor **130** coincides with the turbine axis **X** and with the axis of the piloting unit, i.e. with the axis running through the starting point of the control pivot stroke **72.-**

The control unit, through a sensor (weathervane), which is not shown, installed on the outside close to the turbine, cyclically, after a set length of time, shall measure the angular value of the wind direction at that moment, then average this value with the previous one and check the difference with the angle at which the overall positioning mechanism **100** of the shaft **72** is placed at that moment; after suitable calculations it shall activate the motor shaft **130** in a clockwise or anticlockwise direction to change or not the angle in use of the overall orientation mechanisms, based on the result of the said calculation.-The control unit, while the turbine is in operation, shall always keep under control all of the speed values, as well as the wind direction at the moment, using the two external sensors (anemometer and weathervane); it needs to calculate instantaneously the rotor speed of the turbine, the temperatures in the motor and generator for the purpose of avoiding any overheating.- The control unit needs to be planned according to the various possible situations to make the prompt suitable adjustments for optimal performance of the turbine.-The control unit is able to manage power generation at all times using the ideal number of rounds of the generator for its maximum productivity, depending on the energy made available by the wind speed at that moment and on the amount of energy required downstream of the turbine, for use or storage, by adjusting the number of turbine rounds, enabling the horizontal motor **(112)** in respect of the wind speed and the vertical motor **(130)** in respect of the wind direction.- The revolving speed of the turbine, and subsequently the number of rounds of the power generator, are managed by controlling the moving blades as required, thereby increasing or decreasing the turbine performance. In the extreme case that the wind speed should prove to be excessively high, the control unit to reduce the revolving speed of the turbine rotor, after having reset the eccentricity value of the control unit **72** by managing the motor **112,** is also able to further reduce the number of rounds of the turbine rotor down to zero by managing the motor **130** through increasingly erroneous information about the angular values of the actual wind direction, up to a maximum of 90°, and at the same time by repositioning the control pivot **72** at its maximum extension point.-Once the 90° value of the erroneous angular communication of the wind direction to the piloting device is reached, the blades will be placed at symmetric angles in respect of the turbine axis and the actual wind direction, which means that the torque values of the rotor, which will have opposite signs, will eliminate one another and - as a consequence, no rotation movement of the rotor will be produced. The solution suggested in the aforesaid invention advantageously provides a user-friendly, easily manageable system to reduce the number of rounds of the turbine due to excessive wind speed and to gusts which could lead to harmful consequences as regards the turbine mechanism or electrical part (overheating, etc.). The turbine is still subject to a strong overturning force because the blades offer strong resistance to the wind, but its rotation value is zero. Moreover, turbine **1** is equipped with an emergency braking unit **140** consisting of a disc brake applied to the rotor **2.-** This braking unit is operated directly by the centrifugal force of the rotor **2** and it is designed to start working as soon as a specific speed of the said rotor **2** is exceeded.- This situation is likely to occur if there is no power being supplied to the control unit or if the energy produced is suddenly no longer used, that is to say when the turbine "runs off ". - A typical example of this is a flash of lightning which disconnects the public grid to which the turbine is connected and by which it is powered. The details of the braking unit **140** are not included here because they fall outside the scope of this invention and are already known in the industry. It has been proved, therefore, that this invention makes it possible to achieve the expected results. More specifically, the vertical axis wind turbine with moving blades referred to in this invention, has a better performance with the same wind speed, blade surface, and surface area affected by the movement of the latter (swept surface), compared to other known turbine models. The productivity of this turbine is higher because it breaks its inertia with lower wind speeds which guarantees operation with limited energy production but for much longer periods of time compared to other models, which - if the wind speed is limited - cause downtimes. This wind turbine, as the eccentricity value E varies, through the horizontal electric motor 112, inversely proportional to the wind speed, and managing in the correct way or not the overall mechanism **100** of the piloting unit **70** with the electric motor **130,** depending on the wind direction at that moment, is able to manage the revolving speed of the turbine to produce power with the optimal number of rounds in the generator. In the event of a strong wind blowing, or of violent gusts of wind, the piloting device is able to reduce the revolving speed of the turbine until it stops by placing the blades with angular values symmetric in respect of the turbine axis according to the wind direction at that moment. This invention has been described with regard to the specific implementation form shown in the illustrations; it should be noted, however, that this invention is not limited to the specific implementation form presented and described herein. On the contrary, further variations of the implementation form described here are part of the purpose of this invention, as detailed in the relevant claims.

## Claims

1. Vertical axis wind turbine (1) with moving blades including a rotor (2) which follows a vertical direction along one main revolving axis (X),
three or more blades (3a, 3b, 3c), all the same, directed vertically, placed peripherally in respect of said rotor (2), equidistant one from each other and from the main revolving axis (X), parallel to said main revolving axis (X), with each blade (3a, 3b, 3c) following a linear vertical direction with constant wing profile, and its own respective vertical rotation axis, (Xa, Xb, Xc);
**wherein** each blade (3a, 3b, 3c) is connected to said rotor (2) through first connecting mechanisms (4a, 4'a, 4b, 4'b, 4c, 4'c), one or more for each blade, for allowing said blade (3a, 3b, 3c) to rotate around said main revolving axis (X), and
second connecting mechanisms (50a, 50b, 50c), in the same amount as the first connecting mechanisms (4a, 4'a, 4b, 4'b, 4c, 4'c), introduced between said blades (3a, 3b, 3c) and said first connecting mechanisms (4a, 4'a, 4b, 4'b, 4c, 4'c), for allowing said blade (3a, 3b, 3c) to rotate around its own respective vertical rotation axis(Xa, Xb, Xc) so that it can be placed in different angular positions with regard to said first connecting mechanisms (4a, 4'a, 4b, 4'b, 4c, 4'c), while said blade (3a, 3b, 3c) revolves around said rotor (2),
said angular positions being obtained by means of auxiliary control mechanisms (60a, 60b, 60c), associated with said blade (3a, 3b, 3c), which include one control element (62a, 62b, 62c) having a first end (64a, 64b, 64c) and a second end (66a, 66b, 66c),
**wherein** the first end (64a, 64b, 64c) is connected to a control arm (63a, 63b, 63c), which is firmly fixed onto said blade (3a, 3b, 3c), and the second end (66a, 66b, 66c) is connected to a piloting device (70) associated with a centre of said rotor (2)
**characterised in that**
said piloting device (70) is single and in common between all blades (3a, 3b, 3c), and includes:
one single control pivot (72) which follows a piloting axis (Xp), vertical and parallel to said main rotation axis (X), several first connecting elements (74a, 74b, 74c), of specified length, for connecting said control pivot (72) to said second ends (66a, 66b, 66c),
and several second connecting elements (84a, 84b, 84c) whose first ends (85a, 85b, 85c) are joined in specific points (92a, 92b, 92c) to said rotor (2) and whose second ends (86a, 86b, 86c) are joined in a middle point (87a, 87b, 87c) of said first connecting elements (74a, 74b, 74c) and **in that** said first connecting elements (74a, 74b, 74c) are twice as long as said second connecting elements (84a, 84b, 84c).

2. Turbine (1) according to claim 1, **characterised in that** a distance of the specific point (92a, 92b, 92c) where the first end (85a, 85b, 85c) of the second connecting element (84a, 84b, 84c) is joined to said rotor (2) by the main revolving axis (X) appears to be equal to a length of the second connecting element (84a, 84b, 84c).

3. Turbine (1) according to claim 1, **characterised in that** an orientation, according to wind direction at a given moment, of a motor-driven positioning device (100) on the control pivot (72), without changing any eccentricity values of the control pivot (72) itself, is possible when an electric motor (130), enabled for this purpose, is assembled vertically inside a fixed support (6) of the turbine with its axis coinciding with the main revolving axis (X) of the turbine, the latter axis crossing a start of a stroke of a horizontal rectilinear movement of the control pivot (72).

4. Turbine (1) according to claim 1, **characterised in that** a correct variation of an eccentricity of the control pivot (72) and its orientation - correct or not - in respect of a wind direction at a given moment, within available wind speed limits, allows for an adjustment of turbine rounds based on maximum performance levels of a power generator.

5. Turbine according to claim 1, **characterised in that** a movement system of the blades (3a, 3b 3c) is correct when a variation in a position of the control pivot (72) from zero eccentricity to maximum eccentricity (E) does not lead to any angular variation in the blades (3a, 3b 3c) with regard to their respective vertical rotation vertical axis (Xa, Xb, Xc), and to the respective first connecting mechanisms (4a, 4'a, 4b, 4'b, 4c, 4'c), just in two positions at 180° one with the other, exactly when they find themselves with wing lines (20a 20b, 20c) parallel to an actual direction of the wind and at the same time at 90° in respect of the first connecting mechanisms (4a, 4'a, 4b, 4'b, 4c, 4'c).

6. Turbine according to claim 1, **characterised in that** an addition in the rotor (2) of two parallel metal discs (22, 24), appropriately spaced but firmly connected one to the other with a suitable number of peripheral spacers (26), makes it possible to obtain between them a necessary space for correct operation of all connecting and control elements in the piloting device (70); moreover it makes it possible to place pivots (93a, 93b, 93c) for the hinge joints with the rotor (2) on a lower side of a topmost disc (22).

7. Turbine according to claim 1, **characterised in that** inside the piloting device (70) in each blade (3a, 3b 3c) there is space reserved for the free movement of its first (74a, 74b, 74c) and second (84a, 84b, 84c) connecting elements, during various revolving conditions of the turbine, corresponding to a horizontal cylindrical circular section .

8. Turbine (1) according to claim 1 **characterised in that** said first connecting mechanisms (4a, 4'a, 4b, 4'b, 4c, 4'c) include one or more support rods whose first ends (44a, 44'a, 44b, 44'b, 44c, 44'c) are joined by means of hinges with the second connecting mechanisms (50a, 50b, 50c) linked to said blades (3a, 3b, e 3c) and the second ends (45a, 45'a, 45b, 45'b, 45c, 45'c) are firmly linked to said rotor (2).

9. Turbine (1) according to claim 1, **characterised in that** said first end (64a, 64b, 64c) in the control element (62a, 62b, 62c) is joined by means of a hinge to said blade (3a, 3b, and 3c) at a specified distance from said own respective vertical rotation axis (Xa, Xb, Xc) of said blade (3a, 3b, and 3c), through said control arm (63a, 63b, 63c), and **in that** said second end (66a, 66b, 66c) of said control element (62a, 62b, 62c), which has a specified length, is moved while said rotor (2) revolves by said piloting device (70) to which it is joined by means of a hinge.

10. Turbine (1) according to claim 6, **characterised in that** it is possible to adjust a distance (E) between said control pivot (72) and said main rotation axis (X) by means of a motor-driven positioning device (100).

11. Turbine (1) according to claim 10, **characterised in that** said distance (E), is increased to a maximum value or reduced to zero in a way which is inversely proportional to a wind speed measured by a control unit, at close intervals or in a continuing way.

12. Turbine (1) according to claim 1, **characterised in that** said rotor (2) is connected with a power generation unit (141) coaxially to the turbine or laterally by means of belt transmission system, gears, or other mechanisms.

## Patentansprüche

1. Windturbine (1) mit senkrechter Achse und beweglichen Schaufeln, Folgendes umfassend:
einen Rotor (2), der einer senkrechten Richtung entlang einer Hauptdrehachse (X) folgt,
drei oder mehr Schaufeln (3a, 3b, 3c), die miteinander identisch, senkrecht ausgerichtet, bezüglich des besagten Rotors (2) peripher positioniert, in gleichem Abstand voneinander und von der Hauptdrehachse (X) entfernt und parallel zu der besagten Hauptdrehachse (X) sind, wobei jede Schaufel (3a, 3b, 3c) einer linearen senkrechten Richtung mit konstantem Flügelprofil und ihrer jeweiligen senkrechten Drehachse (Xa, Xb, Xc) folgt;
**wobei** jede Schaufel (3a, 3b, 3c) mit dem besagten Rotor (2) verbunden ist durch erste Verbindungsmechanismen (4a, 4' a, 4b, 4'b, 4c, 4'c), einen oder mehreren für jede Schaufel, um es der besagten Schaufel (3a, 3b, 3c) zu erlauben, sich um die besagte Hauptdrehachse (X) zu drehen, und
durch zweite Verbindungsmechanismen (50a, 50b, 50c), in gleicher Menge wie die ersten Verbindungsmechanismen (4a, 4'a, 4b, 4'b, 4c, 4'c), die zwischen den besagten Schaufeln (3a, 3b, 3c) und den besagten ersten Verbindungsmechanismen (4a, 4'a, 4b, 4'b, 4c, 4'c) eingefügt sind, um es der besagten Schaufel (3a, 3b, 3c) zu erlauben, sich um ihre eigene, jeweilige senkrechte Drehachse (Xa, Xb, Xc) zu drehen, so dass sie bezüglich der besagten ersten Verbindungsmechanismen (4a, 4'a, 4b, 4'b, 4c, 4'c) in unterschiedlichen Winkelpositionen positioniert werden kann, während die besagte Schaufel (3a, 3b, 3c) sich um den besagten Rotor (2) dreht,
wobei die besagten Winkelpositionen mittels zusätzlicher, mit der besagten Schaufel (3a, 3b, 3c) verbundener Steuermechanismen (60a, 60b, 60c) erzielt werden, welche ein Steuerelement (62a, 62b, 62c) mit einem ersten Ende (64a, 64b, 64c) und einem zweiten Ende (66a, 66b, 66c) umfassen,
**wobei** das erste Ende (64a, 64b, 64c) mit einem Steuerarm (63a, 63b, 63c) verbunden ist, der fest an der besagten Schaufel (3a, 3b, 3c) fixiert ist, und das zweite Ende (66a, 66b, 66c) mit einer Vorsteuervorrichtung (70) verbunden ist, die mit einem Mittelpunkt des besagten Rotors (2) verbunden ist,
**dadurch gekennzeichnet, dass**
die besagte Vorsteuervorrichtung (70) für alle Schaufeln (3a, 3b, 3c) eine einzige ist und Folgendes umfasst:
einen einzelnen Steuerzapfen (72), der einer Vorsteuerachse (Xp) folgt, die senkrecht und parallel zu der besagten Hauptdrehachse (X) steht, mehrere erste Verbindungselemente (74a, 74b, 74c) von bestimmter Länge zur Verbindung des besagten Steuerzapfens (72) mit den besagten zweiten Enden (66a, 66b, 66c),
und mehreren zweiten Verbindungselementen (84a, 84b, 84c), deren erste Enden (85a, 85b, 85c) in spezifischen Punkten (92a, 92b, 92c) mit dem besagten Rotor (2) verbunden sind und deren zweite Enden (86a, 86b, 86c) in einem mittleren Punkt (87a, 87b, 87c) der besagten ersten Verbindungselemente (74a, 74b, 74c) verbunden sind,
und dadurch, dass die besagten ersten Verbindungselemente (74a, 74b, 74c) doppelt so lang sind wie die besagten zweiten Verbindungselemente (84a, 84b, 84c).

2. Turbine (1) nach Patentanspruch 1, **dadurch gekennzeichnet, dass** ein Abstand von dem spezifischen Punkt (92a, 92b, 92c), in dem das erste Ende (85a, 85b, 85c) des zweiten Verbindungselements (84a, 84b, 84c) durch die besagte Hauptdrehachse (X) mit dem besagten Rotor (2) verbunden ist, gleich einer Länge des zweiten Verbindungselements (84a, 84b, 84c) resultiert.

3. Turbine (1) nach Patentanspruch 1, **dadurch gekennzeichnet, dass** eine der Windrichtung in einem gegebenen Moment entsprechende Orientierung einer motorbetriebenen Positionierungsvorrichtung (100) an dem Steuerzapfen (72) ohne Veränderung jeglicher Exzentrizitätswerte des Steuerzapfens (72) selbst möglich ist, wenn ein zu diesem Zweck aktivierter Elektromotor (130) senkrecht so innerhalb einer feststehenden Halterung (6) der Turbine montiert ist, dass seine Achse mit der Hauptdrehachse (X) der Turbine zusammenfällt, wobei die letztere Achse einen Anfang eines Hubs einer waagerechten geradlinigen Bewegung des Steuerzapfens (72) kreuzt.

4. Turbine (1) nach Patentanspruch 1, **dadurch gekennzeichnet, dass** eine korrekte Veränderung einer Exzentrizität des Steuerzapfens (72) und seiner - korrekten oder nicht korrekten - Orientierung bezüglich einer Windrichtung in einem gegebenen Moment innerhalb verfügbarer Windrichtungsgrenzen eine auf Spitzenleistungsniveaus eines Stromgenerators basierende Korrektur der Turbinenumdrehungen erlaubt.

5. Turbine nach Patentanspruch 1, **dadurch gekennzeichnet, dass** ein Bewegungssystem der Schaufeln (3a, 3b, 3c) korrekt ist, wenn eine Veränderung in einer Position des Steuerzapfens (72) von Null Exzentrizität bis zur maximalen Exzentrizität (E) zu keiner Winkeländerung der Schaufeln (3a, 3b, 3c) bezüglich ihrer jeweiligen senkrechten Drehachse (Xa, Xb, Xc) und der jeweiligen ersten Verbindungsmechanismen (4a, 4'a, 4b, 4'b, 4c, 4'c) führt, genau in zwei Positionen auf 180° zueinander, exakt wenn sie mit den Flügellinien (20a, 20b, 20c) parallel zu einer realen Windrichtung und gleichzeitig auf 90° bezüglich der ersten Verbindungsmechanismen (4a, 4'a, 4b, 4'b, 4c, 4'c) positioniert sind.

6. Turbine nach Patentanspruch 1, **dadurch gekennzeichnet, dass** eine Hinzufügung im Rotor (2) von zwei parallelen Metallscheiben (22, 24), die fest miteinander verbunden und dennoch angemessen voneinander distanziert sind durch eine geeignete Anzahl peripherer Distanzstücke (26), es ermöglicht, zwischen ihnen einen für den korrekten Betrieb aller Verbindungs- und Steuerelemente in der Vorsteuervorrichtung (70) notwendigen Raum zu erhalten; darüber hinaus ermöglicht sie die Platzierung von Drehzapfen (93a, 93b, 93c) für die Gelenkverbindungen mit dem Rotor (2) an einer unteren Seite der obersten Scheibe (22).

7. Turbine nach Patentanspruch 1, **dadurch gekennzeichnet, dass** innerhalb der Vorsteuervorrichtung (70) in jeder Schaufel (3a, 3b, 3c) für die freie Bewegung ihrer ersten (74a, 74b, 74c) und zweiten (84a, 84b, 84c) Verbindungselemente während verschiedener Umdrehungsbedingungen der Turbine Raum reserviert ist, der einem waagerechten zylindrischen, kreisförmigen Abschnitt entspricht.

8. Turbine (1) nach Patentanspruch 1, **dadurch gekennzeichnet, dass** die besagten ersten Verbindungsmechanismen (4a, 4' a, 4b, 4'b, 4c, 4'c) eine oder mehrere Tragstäbe umfassen, deren erste Enden (44a, 44'a, 44b, 44'b, 44c, 44'c) durch Gelenke mit den zweiten, mit den besagten Schaufeln (3a, 3b, 3c) verbundenen Verbindungsmechanismen (50a, 50b, 50c) verbunden sind und deren zweite Enden (45a, 45'a, 45b, 45'b, 45c, 45'c) fest mit dem besagten Rotor (2) verbunden sind.

9. Turbine (1) nach Patentanspruch 1, **dadurch gekennzeichnet, dass** das besagte erste Ende (64a, 64b, 64c) in dem Steuerelement (62a, 62b, 62c) durch ein Gelenk mit der besagten Schaufel (3a, 3b, and 3c) verbunden ist in einem bestimmten Abstand von der besagten eigenen, jeweiligen senkrechten Drehachse (Xa, Xb, Xc) der besagten Schaufel (3a, 3b, und 3c), durch den besagten Steuerarm (63a, 63b, 63c), und dadurch, dass das besagte zweite Ende (66a, 66b, 66c) des besagten Steuerelements (62a, 62b, 62c), das eine bestimmte Länge aufweist, bewegt wird, während der besagte Rotor (2) sich durch die besagte Vorsteuervorrichtung (70), mit der er durch ein Gelenk verbunden ist, dreht.

10. Turbine (1) nach Patentanspruch 6, **dadurch gekennzeichnet, dass** es möglich ist, mittels einer motorbetriebenen Positionierungsvorrichtung (100) einen Abstand (E) zwischen dem besagten Steuerzapfen (72) und der besagten Hauptdrehachse (X) einzustellen.

11. Turbine (1) nach Patentanspruch 10, **dadurch gekennzeichnet, dass** der besagte Abstand (E) auf einen Höchstwert erhöht oder auf Null reduziert wird auf eine Weise, die umgekehrt proportional zu einer Windgeschwindigkeit ist, die in kurzen Intervallen oder kontinuierlich durch ein Steuergerät gemessen wird.

12. Turbine (1) nach Patentanspruch 1, **dadurch gekennzeichnet, dass** der besagte Rotor (2) koaxial zu oder seitlich der Turbine durch ein Riemenantriebssystem, Zahnräder oder andere Mechanismen mit einem Stromerzeugungsaggregat (141) verbunden ist.

## Revendications

1. Turbine éolienne à axe vertical (1) avec pales mobiles comprenant un rotor (2) qui se développe dans le sens vertical le long d'un axe de rotation principal (X),
trois ou plusieurs pales (3a, 3b, 3c), toutes égales, tournées dans la direction verticale, disposées de manière périphérique par rapport audit rotor (2), équidistantes entre elles et de l'axe de rotation principal (X), parallèles audit axe de rotation principal (X), avec chaque pale (3a, 3b, 3c) qui suit une direction verticale linéaire avec un profil des ailes constant, et son axe de rotation vertical (Xa, Xb, Xe) ;
où chaque pale (3a, 3b, 3c) est reliée audit rotor (2) au moyen de premiers mécanismes de connexion (4a, 4'a, 4b, 4'b, 4e, 4'c), un ou plusieurs pour chaque pale, pour permettre à ladite pale (3a, 3b, 3c) de tourner autour dudit axe de rotation principal (X), et de deuxièmes mécanismes de connexion (50a, 50b, 50c) dans la même quantité des premiers mécanismes de connexion (4a, 4'a, 4b, 4'b, 4c, 4'c), interposés entre lesdites pales (3a, 3b, 3c) et lesdits premiers mécanismes de connexion (4a, 4'a, 4b, 4'b, 4c, 4'c), pour permettre à ladite pale (3a, 3b, e 3e) de tourner autour de son axe de rotation vertical (Xa, Xb, Xc) de manière à ce qu'elle puisse être disposée en positions angulaires différentes par rapport auxdits premiers mécanismes de connexion (4a, 4'a, 4b, 4'b, 4c, 4'c), tandis que ladite pale (3a, 3b, 3c) tourne autour dudit rotor (2),
lesdites positions angulaires étant obtenues par des mécanismes de contrôle auxiliaires (60a, 60b, 60c), associés à ladite pale (3a, 3b, 3c), qui comprennent un élément de commande (62a, 62b, 62c) ayant une première extrémité (64a, 64b, 64c) et une deuxième extrémité (66a, 66b, 66c),
où la première extrémité (64a, 64b, 64c) est reliée à un bras de commande (63a, 63b, 63c), qui est relié fixement sur ladite pale (3a, 3b, 3c), et la deuxième extrémité (66a, 66b, 66c) est reliée à un dispositif de pilotage (70) associé avec un centre dudit rotor (2)
**caractérisée en ce que**
ledit dispositif de pilotage (70) est unique et en commun entre toutes les pales (3a, 3b, 3c), et comprend :
un pivot de commande unique (72) qui se développe le long d'un axe de pilotage (Xp), vertical et parallèle audit axe de rotation principal (X), plusieurs premiers éléments de connexion (74a, 74b, 74c), ayant une longueur déterminée, pour relier ledit pivot de commande (72) auxdites deuxièmes extrémités (66a, 66b, 66c),
et plusieurs deuxièmes éléments de connexion (84a, 84b, 84c) dont les premières extrémités (85a, 85b, 85c) sont reliées dans des points spécifiques (92a, 92b, 92c) audit rotor (2) et dont les deuxièmes extrémités (86a, 86b, 86c) sont reliées dans un point intermédiaire (87a, 87b, 87c) desdits premiers éléments de connexion (74a, 74b, 74c)
et **en ce que** lesdits premiers éléments de connexion (74a, 74b, 74c) sont deux fois plus longs que lesdits deuxièmes éléments de connexion (84a, 84b, 84c).

2. Turbine (1) selon la revendication 1, **caractérisée en ce qu'**une distance du point spécifique (92a, 92b, 92c), où la première extrémité (85a 85b, 85c) du deuxième élément de connexion (84a, 84b, 84c) est reliée audit rotor (2) au moyen dudit axe de rotation principal (X), semble être égale à la longueur du deuxième élément de connexion (84a, 84b, 84c).

3. Turbine (1) selon la revendication 1, **caractérisée en ce qu'**une orientation, selon la direction du vent à un moment donné, d'un dispositif de positionnement motorisé (100) du pivot de commande (72), sans changer aucune valeur d'excentricité du pivot de commande (72) même, est possible quand un moteur électrique (130), autorisé à cet effet, est assemblé verticalement à l'intérieur d'un support fixe (6) de la turbine avec son axe coïncidant avec l'axe de rotation principal (X) de la turbine, ce dernier axe passant par le début de la course d'un mouvement horizontal rectiligne du pivot de commande (72).

4. Turbine (1) selon la revendication 1, **caractérisée en ce qu'**une variation correcte d'une excentricité du pivot de commande (72) et son orientation - correcte ou non - par rapport à la direction du vent à un moment donné, dans des limites de la vitesse du vent disponible, permettent de régler les tours de la turbine pour les adapter aux niveaux de performance maximums d'un générateur de courant.

5. Turbine selon la revendication 1, **caractérisée en ce qu'**un système de mouvement des pales (3a, 3b, 3c) est correct quand une variation dans une position du pivot de commande (72) de l'excentricité zéro à l'excentricité maximale (E) les pales (3a, 3b, 3c) ne subissent aucune variation angulaire par rapport à leur axe de rotation vertical (Xa, Xb, Xc) et aux premiers mécanismes de connexion respectifs (4a, 4'a, 4b, 4'b, 4c, 4'c), seulement en deux positions à 180° l'un par rapport à l'autre, exactement quand elles se trouvent avec les lignes des ailes (20a, 20b, 20c) parallèles à la direction effective du vent et en même temps à 90° par rapport aux premiers mécanismes de connexion (4a, 4'a, 4b, 4'b, 4c, 4'c).

6. Turbine selon la revendication 1, **caractérisée en ce qu'**une introduction dans le rotor (2) de deux disques métalliques parallèles (22, 24), opportunément espacés mais rigidement reliés entre eux avec un nombre approprié d'entretoises périphériques (26), permet de réaliser entre eux l'espace nécessaire pour le fonctionnement correct de tous les éléments de connexion et de commande dans le dispositif de pilotage (70) ; elle permet en outre de positionner les pivots (93a, 93b 93c) pour la connexion par charnière avec le rotor (2) sur un côté inférieur du disque plus élevé (22).

7. Turbine selon la revendication 1, **caractérisée en ce qu'**à l'intérieur du dispositif de pilotage (70) dans chaque pale (3a, 3b, 3c) se trouve un espace est réservé pour le mouvement libre de ses premiers (74a, 74b, 74c) et de ses deuxièmes éléments de connexion (84a, 84b, 84c), durant les différentes conditions de rotation de la turbine, correspondant à une section circulaire cylindrique horizontale.

8. Turbine (1) selon la revendication 1, **caractérisée en ce que** lesdits premiers mécanismes de connexion (4a, 4'a, 4b, 4'b, 4c, 4'c) comprennent une ou plusieurs tiges de soutien dont les premières extrémités (44a, 44'a, 44b, 44'b, 44c, 44'c) sont reliées par des charnières avec les deuxièmes mécanismes de connexion (50a, 50b, 50c) reliés auxdites pales (3a, 3b, e 3c) et les deuxièmes extrémités (45a, 45'a, 45b, 45'b, 45c, 45'c) sont solidement reliées audit rotor (2).

9. Turbine (1) selon la revendication 1, **caractérisée en ce que** ladite première extrémité (64a, 64b, 64c) dudit élément de commande (62a, 62b, 62c) est articulée par une charnière à ladite pale (3a, 3b, 3c) à une distance déterminée de son axe de rotation vertical (Xa, Xb, Xe) de ladite pale (3a, 3b, et 3c), au moyen dudit bras de commande (63a, 63b, 63c), et **en ce que** ladite deuxième extrémité (66a, 66b, 66c) dudit élément de commande (62a, 62b, 62c), qui présente une longueur prédéterminée, est déplacée durant la rotation dudit rotor (2) par ledit dispositif de pilotage (70) auquel elle est reliée par une charnière.

10. Turbine (1) selon la revendication 6, **caractérisée en ce qu'**il est possible de régler une distance (E) entre ledit pivot de contrôle (72) et ledit axe de rotation principal (X) au moyen d'un dispositif de positionnement motorisé (100).

11. Turbine (1) selon la revendication 10, **caractérisée en ce que** ladite distance (E) est augmentée jusqu'à une valeur maximale ou réduite à zéro de manière à ce qu'elle soit inversement proportionnelle à une vitesse du vent mesurée par une unité de commande, à intervalles réduits ou de manière continue.

12. Turbine (1) selon la revendication 1, **caractérisée en ce que** ledit rotor (2) est relié avec une unité de production d'énergie (141) coaxialement à la turbine ou latéralement au moyen d'un système de transmission à courroie, engrenages ou autres mécanismes.
